# EUROPEAN PATENT APPLICATION

(11) **EP 4 148 711 A1**
(43) Date of publication of application: **15.03.2023**
(21) Application number: 21196572.8
(22) Date of filing: 14.09.2021
(51) Int. Cl.: G09F 9/30, G09F 19/18, C09K 9/02, G02B 5/23, G02F 1/01

(54) **PHOTON AND/OR PHOTOELECTRON DRIVEN FULL-COLOUR REFLECTIVE PASSIVE SCREEN**

(71) Applicant: Freshape SA, 1690 Villaz-St-Pierre (CH)
(72) Inventor: LIU, Yuhang, 1030 Bussigny (CH); KUNG, Yen-Cheng, 1110 Morges (CH); Liu, Yizhu, 1024 Ecublens (CH)
(74) Representative: Schneiter, Sorin

(57) **Abstract**

The present invention concerns a photon and/or photoelectron driven full-color reflective passive screen (10). The screen (10) preferably comprises at least three photochromic and/or a photoelectrochromic materials, in which different photochromic materials capable of absorbing different wavelengths of photons, and changing to different colors, in which the arrangement of the mix of different colors is capable to form a full-color screen.

## Description

### Technical Field

The present invention generally relates to the field of screens and screen systems, and preferably to passive and/or reflective screens. More specifically, the invention relates to photon- or photoelectron driven screens, such as photochromic and/or photoelectrochromic screens, an in particular multi- or full-color screens.

### Background Art and Problems Solved by the Invention

Chromism is a process that implies a change, often reversible, in the color of a material. In most cases, chromism is based on a change in the electron state of the materials. Many compounds with specific chromism have been synthesized to date. Photochromic materials are materials that reversibly change color by the absorption of electromagnetic radiation. One of the most famous reversible photochromic applications is color changing lenses for sunglasses.

Recently, the possibility of screens exploiting the properties of photochromic materials has been investigated. The color change in photochromic materials is affected by the wavelength, intensity and exposure time of the incoming light. In another kind of photo-induced color changing materials, photoelectrochromic materials, the color change involves the generation of a free charge, a photoelectron, in the photoelectrochromic material, wherein the free charge will drive the color change.

US 7,410,750 B2 discloses a multicolored screen comprising a substrate having a coating of marking particles comprising a mixture of two photochromic materials, the two materials being a spiropyran material and a single dithienylethene. Although a screen is mentioned, this document refers to images, and does not refer to full-colour possibilities. Furthermore, this document is silent with respect to the driving of a display.

JP 2004 258474 A discloses a photochromic screen which uses light emitted from a electrochemiluminescence-based light emitting layer provided between substrates comprising electrodes, this light being driven by an active matrix and being provided so as to produce the appropriate color change in the photochromic layer. The light emitting layer within the screen thus emits light, which may also excite the screen through the transparent substrate and impinge on a viewer's eye, such that this type of screen is not considered as an entirely passive screen. Due to the complexity of the architecture, including the active matrix and the electrochemiluminescent layer, the fabrication process of this device is complex. The document is also silent with respect to the bleaching of the image generated by the photochromic dyes.

Another technology concerns e-paper or e-ink devices, which can be seen as passive displays in that they are based on the reflection of light and do not emit light. However, these devices generally also require an active matrix for addressing the image units. Generally, e-paper screens are single color devices. Full-color e-papers have been conceived, however, their performance is generally poor. A disadvantage applicable to all screens based on an active matrix is that the display surface is generally limited to the size of the active matrix. The active matrix will significantly increase the cost of the final product, especially when the device size reaches larger sizes, in particular beyond the size of 100 inches. It is thus an objective of the invention to provide displays that can be realized easily and cost efficiently in all desired sizes, including large, outdoor displays.

The present invention further addresses the objective of providing a passive screen that preferably does not emit light on its own. Passive screens have certain properties that distinguish them from other screens, such as liquid crystal screens (LCD) or organic light emitting diode (OLED) screens. Passive screens do not emit light themselves, but reflect or transmit the light of the environment in accordance with the color characteristics of the material used in the screen. Continued use of passive screen is considered to be less tiring to the human eye than light emitting, illuminating screens, such as the above-mentioned LCDs and OLED screens. Watching a passive screen corresponds more to watching a printed medium (reflecting light from the environment) than using a luminosity-based screen. Passive screens exhibit a number of further advantages, such as a a wide viewing angle, lower energy consumption and better light utilization efficiency. Passive screens may thus be considered particularly advantageous for outdoor screens (ambient light) and for screen-based reading (high contrast, less tiring to the human eye).

In view of the above it is an objective of the invention to provide a passive, reflective full-colour screen. It is an objective to provide a screen that lacks an internal light source and an active matrix, and which can be easily provided in all desired sizes, including larger sizes, for example, greater than 100 inch. It is a further objective to provide a solution for driving a passive, full-color screen without using an active matrix.

It is also an objective to provide new architectures for photo(electro)chromic screens.

The present invention addresses the problems and objectives indicated above.

### Summary of the Invention

Remarkably, the present inventors provide a screen system and a screen, wherein the screen is based on photochromic and/or photoelectrochromic materials. The screen is suitable to exhibit an image upon appropriate illumination by a source of electromagnetic radiation. The screen can be realized as multi-color and preferably full-color. The screen is preferably a passive, reflective screen.

In an aspect, the invention provides a screen comprising first and second substrates, a space between said substrates, and chromic materials, wherein: said chromic materials are provided in said space; said chromic materials are selected from photoelectrochromic materials, photochromic materials, and combinations thereof, said chromic material preferably having the property of changing color when activated by way of electromagnetic radiation or by way a photoelectron that is generated by way of electromagnetic radiation, wherein said chromic materials comprise at least first and second chromic materials that have first and second colors when activated, wherein said first and second colors are different.

In an aspect, the invention provides a screen comprising first and second substrates, a space between said substrates, a support material and chromic materials, wherein: said support material is provided in said space; said chromic materials are selected from photoelectrochromic materials, photochromic materials, and combinations thereof, said chromic material preferably having the property of changing color when activated by way of electromagnetic radiation or by way a photoelectron that is generated by way of electromagnetic radiation, wherein said chromic materials comprise at least first and second chromic materials that have first and second colors when activated, wherein said first and second colors are different; and, said at least first and second chromic materials are provided on said support material.

In an aspect, the invention provides a screen comprising the screen of the invention, a light emitting device, and a driver unit.

In a preferred embodiment, said light emitting device is configured to emit light in the direction of said screen so as to activate said chromic materials, wherein said light emitting device is further configured to emit light having at least first and second different, predetermined wavelengths or wavelength ranges. Preferably, light having said first wavelength or wavelength range is suitable to activate said first chromic material or to generate a photoelectron capable of activating said first chromic material, and, light having said second wavelength or wavelength range is suitable to activate said second chromic material or to generate a photoelectron capable of activating said second chromic material.

In an aspect, the invention provides a method for operating the screen system of the invention, the method comprising inducing said light emitting device so as to emit light of said first and second wavelengths and/or wavelengths ranges, and, if applicable, said second wavelength and/or wavelength range on one or more spots of said screen, thereby activating first and second chromic materials, and, if applicable, third chromic materials at said spot.

Further aspects and preferred embodiments of the invention are defined herein below and in the appended claims. Further features and advantages of the invention will become apparent to the skilled person from the description of the preferred embodiments given below.

### Brief Description of the Drawings

**Figures 1A** and **1B** schematically illustrate different embodiments of the screen system according to the invention.
**Figures 2A-2E** schematically illustrate architectures of screen devices according to preferred embodiments of the invention
**Figure 3** schematically illustrates a nanoparticle on which chromic materials are adsorbed, in accordance with an embodiment of the invention.
**Figure 4** schematically illustrates different nanoparticles on which different chromic materials are adsorbed, in accordance with an embodiment of the invention.
**Figure 5** shows the chemical structures of photoelectrochromic materials in accordance with embodiments of the present invention.
**Figure 6** schematically illustrates the preparation of coated nanoparticles in accordance with an embodiment of the invention.

Hereinafter, preferred embodiments of the device of the invention are described, in order to illustrate the invention, without any intention to limit the scope of the present invention.

### Detailed Description of the Preferred Embodiments

In some embodiments, the present invention relates to a screen system comprising a screen that functions on the basis of photochromic and/or photoelectrochromic materials. In order to display graphical and/or textual information or images, the screen system is preferably configured to illuminate the screen with electromagnetic radiation.

For the purpose of the present specification, the term "chromic", for example in the expression "chromic material", means "photochromic and/or photoelectrochromic".

"Photochromic materials" are materials that are capable of undergoing a color change under the effect of electromagnetic radiation, preferably light ranging from the infrared to the UV wavelength range of electromagnetic radiation.

"Photoelectrochromic materials" are materials that undergo a color change when being excited by an electron, which electron is preferably generated by light impinging on said material or on a photosensitizer material with which said photoelectrochromic material is in electric contact.

For the purpose of the present specification, "black" and "white" are also considered as colors.

A change from transparent or white to black, and vice versa, for example, is considered to be a "color change".

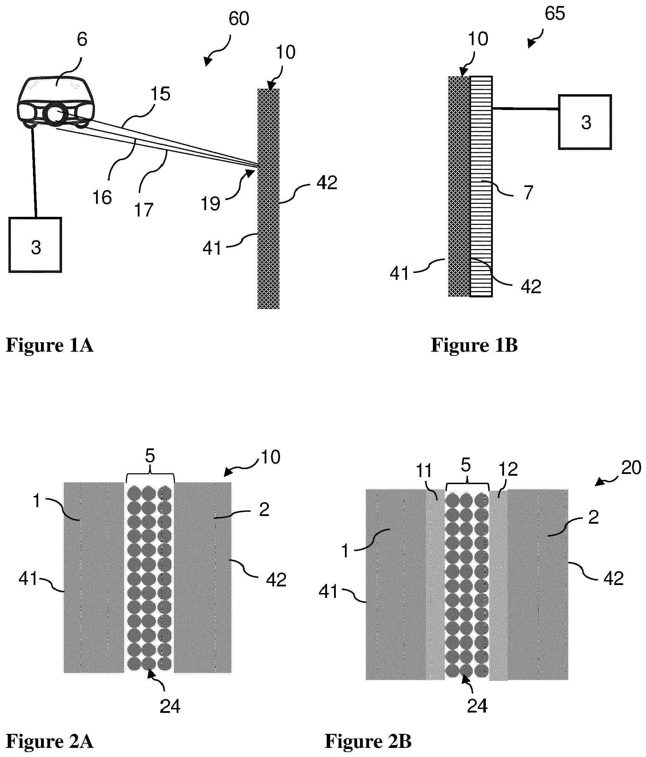

**Figure 1A** illustrates a screen system 60 comprising a screen 10 and a light emitting device, which here is a projector 6, preferably a laser projector. The system further comprises a driver unit 3, which controls the projector and in particular the light 15, 16 and 17 emitted by the former.

The screen 10 comprises a front side 41 and a back side 42, in which the front side is configured for being illuminated by the projector 6. The screen comprises chromic materials, which are activated by the light emitted by the projector, or by a photoelectron generated by the light. Exemplary architectures of the screens comprising the chromic materials will be described in more detail elsewhere in this specification.

In order to generate a multi-color and preferably a full-color image on the screen, the projector is preferably configured to emit light of different wavelengths and/or wavelength ranges, thereby addressing different chromic materials present in the screen. As shown in Figure 1A, light rays 15, 16 and 17 are characterized by different wavelengths. The light rays preferably traverse the preferably empty space separating the projector from the front side of the screen. They are directed to an area or spot 19, in order to induce the color change of the chromic materials at that area of the screen. Since the projector is suitable to illuminate the entire screen, preferably simultaneously, an image is created on the screen.

Preferably, the driver unit 3 is not only configured to adjust the direction of a particular light of a particular wavelength emitted by the projector, but also to adjust the duration and the intensity of the illumination at any particular sport, thereby contributing to the generation of the information shown on the screen.

The driver unit 3 preferably comprises a data processing entity, for example a microcontroller or a computer, including a CPU and memory, and preferably software and/or firmware for driving the light source.

In an embodiment, the light emitting device is suitable to generate at least two, preferably at least three, and more preferably at least four different wavelengths or wavelengths ranges of light. This allows the system to induce a color change in different chromic materials, which are responsive to said different wavelengths.

**Figure 1B** shows a system 65 according to another embodiment of the invention, in which the light emitting device is a light emitting panel 7 instead of a projector. The light emitting panel is provided at the backside 42 of the screen 10, and preferably rigidly connected to the latter.

In an embodiment, the light emitting panel 7 is selected from LED display, a liquid crystal display LCD, and from a plasma display (PDP). As with the projector, the panel 7 is preferably adapted to emit light of different wavelengths, preferably two or more, more preferably three or more, for example up to four different wavelengths or wavelength ranges, thereby addressing correspondingly responsive chromic materials contained in the display. In this embodiment, the light rays do preferably not cross an empty space provided between the light source and the chromic materials of the screen.

Figures 2A-2E show device architectures of the screen in accordance with different embodiments of the invention. These figures represent cross sections extending perpendicularly to the opposed outer surfaces 41 and 42 of the screen. The device 10 shown in **Figure 2A** comprises first and second substantially flat substrates 1, 2, spaced apart one with respect to the other so as to define a space 5 between the substrates. At least one of the substrates 1, 2 is transparent. Transparent substrates may be made from materials comprising and/or essentially consisting of glass and plastics.

The transparent substrate makes sure that light can enter into the inner space and reflected light can get out of the screen, so as to display an image. In a preferred embodiment, both said first and second substrates are transparent. In an embodiment, one or both substrates is transparent preferably to all visible light and preferably in addition to UV and infrared and/or near infrared light. In some embodiments, one of the substrates is not or need not be transparent.

As becomes apparent, in the embodiment shown in Fig. 1B, both substrates 1, 2 of the screen are preferably transparent, such that light can enter through one substrate (e.g. 2) and the image produced by the screen is visible through the other of the two substrates (e.g. 1). Regarding the screen of the system shown in Fig. 1A, here the front substrate, through which the light 15-17 enters the device, is preferably transparent, but the back substrate may or may not be transparent. In the embodiment shown in Fig. 1B, the displayed information is visible on the front or first side 41 of the screen, while the light emitting device 7 is in contact with or adjacent to second or back side 42 of the screen.

A support material or support layer 24 is provided in the space 5 between said first and second substrates. Preferably, a chromic material is provided on said support material.

Preferably, the support material comprises or consist essentially of nanoparticles. Embodiments of these nanoparticles are described in more detail elsewhere in this specification.

In an embodiment, one or several different photochromic and/or photoelectrochromic materials are preferably coated and/or adsorbed on said nanoparticles. The chromic material is preferably in electric contact with said support material and/or said nanoparticles.

For the purpose of the present specification, the expression "electrically connected" or "in electric contact" means that steady current (electrons, holes) flow occurs between the items that are electrically connected under fixed potential difference. In other words, transport of charges occurs by way of electronic motion, not ion transport.

As mentioned above, layer 24 as shown in Figs 1A-1E may comprise several, for example, two, three or four layers that are preferably provided one on top of the other, for example in case of RGB color mixing.

In an embodiment, the chromic materials provides a monolayer, preferably a monomolecular layer on the surface of said support material.

**Figure 2B** discloses a device that is similar to the one in Fig. 2A, but a conductive layer 11, 12 being provided on each of the inner surfaces of the first and second substrates 1, 2, respectively. At least one of the conductive layers 11, 12, but possibly both, are transparent conductive layers. The conductive layers 11, 12 may comprise and/or essentially consist of conductive metal oxides or conductive polymers, for example. Transparent conductive metal oxides (TCOs) may be selected from from indium doped tin oxide (ITO), fluorine doped tin oxide (FTO), ZnO-Ga₂O₃, ZnO-Al₂O₃, tin oxide, antimony doped tin oxide (ATO), SrGeO₃ and zinc oxide, or combinations thereof, for example. In the embodiment shown in Fig. 2B, the inner space 5 is defined by the space between the two surfaces provided by the conductive layers 11, 12, which surfaces face each other and which face the support layer 24. The conductive layer, if present, can be understood as being part of the substrate, such that one can say that the corresponding substrate is a conductive substrate, preferably a transparent conductive substrate. The one or more conductive layers may also be referred to as electrode layers.

In an embodiment, at least one conductive layer is transparent with respect to all visible light and in addition to UV, infrared and/or near infrared light. One conductive layer may thus not be transparent,

In an embodiment, the first electrode 11 is a working electrode and the second electrode 12 is a counter electrode.

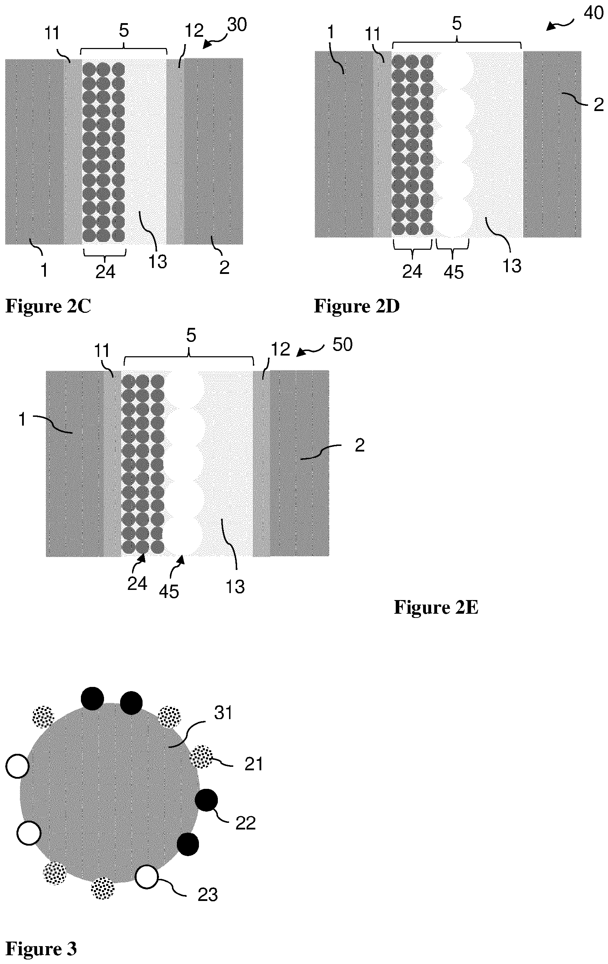

The device shown in **Figure 2C** differs from the one of Fig. 1B basically in that an electrolyte 13 is present in space 5 defined by the substrates 1, 2. The electrolyte is preferably provided in order to allow for faster switching of the chromic materials, in particular the photoelectrochromic materials, and/or to prevent undesired bleaching. The bleached and/or original state or color of the chromic material is preferably the state or color that the material assumes in the absence of illumination or photon-induced excitation.

**Figure 2D** shows a device further comprising a scattering layer 45. The scattering layer is preferably formed by nano- or microparticles having a diameter of 100 nm to 5 µm, preferably 150-2000 nm, more preferably 200-1000 nm. In the embodiment shown, the scattering layer is deposited directly on the nanoparticle support layer 24 on which the chromic material is provided. In another embodiment, the scattering layer 45 is deposited on the second substrate 2 or on the conductive layer 12 of the second substrate (this embodiment is not shown).

Materials for the scattering layer may be selected from TiO₂, Al₂O₃, or other and/or related metal oxide materials, preferably in the form of white nanoparticles, for example.

**Figure 2E** differs from the embodiment shown in Fig. 2D in that a second conductive layer 12 is present on the second substrate as shown in Fig. 2B and from the embodiment in Fig. 2C in that a scattering layer is present. An electrolyte 13 is preferably present in the embodiments shown in Figs 2C-2E, and may optionally also be present in the embodiments shown in Figs 2A and 2B, although it is not shown in these figures.

As illustrated by Figs 2A-2E, an electrolyte may but need not be present in the device of the invention, in particular in the space 5 defined by the substrates 1, 2, or, if applicable, the space 5 defined by the substrates comprising or not an electrode layer 11, 12.

The electrolyte preferably comprises charged species and a dispersion matrix. In some embodiments, the dispersion matrix is selected from water and from polar or non-polar organic solvents. In some embodiments, the electrolyte comprises a molten salt, an eutectic melt, and the like.

The charged species may be selected from salts, halides, alkali metals ions, metalloid ions, metal ions and/or charged molecules, for example organic cations and organic anions.

In some embodiments, the electrolyte comprises a redox material. In other embodiments, the electrolyte lacks a redox material, but comprises one or more charged species as mentioned above.

The function of charged species in the electrolyte is to stabilize the chromic material and/or the photosensitizing support material, after the injection of an electron into the chromic material. The charged species may form an electrical double layer on the support material and/or around the chromic material, thereby preventing or decelerating charge recombination. For example, once an electron is injected from the support material into the chromic material, positively charged species may get in vicinity of the surface of the support material and form said layer that stabilizes the charge separation.

In some embodiments, the electrolyte may comprise a redox active species. If present, the redox active species is preferably capable of returning an electron to the support material (or taking the hole from the support material), after the latter has been excited and transferred an electron to the chromic material. This also prevents charge recombination, as the electron in the chromic material cannot return back to the support material.

The stabilization of the charge separation preferably stabilizes the activated and preferably colored form of the chromic material and thereby reduces undesired bleaching of the chromic material.

Exemplary electrolytes encompass, solutions of KCl in water, Lithium bis(trifluoromethanesulfonyl)imide solution in water or polar or non-polar organic solvents such as acetonitrile and gamma-butyrolactone, Tetrabutylammonium hexafluorophosphate in polar organic solvents, such as propylene carbonate, or toluene, for example.

Figs 2A-2E illustrate screens comprising nanoparticle support materials. In accordance with this embodiment, the support material comprises or forms one or more selected from the group of a structured, non-smooth and surface-increasing surface, in particular on the mesoscopic scale. In accordance with this embodiment, the support material provides or forms a scaffold, in particular a 3D scaffold, on which the said chromic material as provided, preferably adsorbed. The 3D scaffold preferably comprises one or more selected from a mesoporous structure, nanoporous structure, a nanopillar structure, and a nanotube structure, or a combination comprising two or more of the aforementioned.

The nanoparticles of the support material preferably have average dimensions and/or sizes in the range of 2 to 1500 nm, preferably 3 to 1000 nm, even more preferably 4 to 500 nm, and most preferably 5 to 200 nm. "Dimension" or "size" with respect to the nanoparticles means here extensions in any direction of space, preferably the average maximum extension of the nanoparticles. In case of substantially spherical or ellipsoid particles, the average diameter is preferably referred to. In case of, nanosheets, the indicated dimensions refer to the length and thickness. Preferably, the size of the nanoparticles is determined by microscopical techniques, for example.

In another embodiment, not separately illustrated, said support material comprises or forms one or more selected from a flat, smooth and/or even surface, on which said chromic material as provided, preferably adsorbed. The flat, smooth and/or even surface preferably applies to the surface on the mesoscopic scale.

**Figure 3** illustrates an embodiment of the nanoparticles in the nanoparticle layer 24, in particular in a multi-color screen, preferably a full color screen. In the embodiment shown, three different chromic materials, first, second and third chromic materials 21, 22 and 23 are deposited on the nanoparticle 31. Preferably, the chromic materials 21, 22 and 23 are molecules having different structures, accounting for their different color properties. In a preferred embodiment, the chromic material/materials is/are attached to the nanoparticle by way of an anchoring group that is part of the molecule. More details concerning exemplary chromic materials are disclosed elsewhere in this specification.

Preferably, said first chromic material 21 exhibits a first color when activated, said second chromic material 22 exhibits a second color when activated, and said third chromic material 21 exhibits a third color when activated, wherein said first, second and third colors are different. In an embodiment, said first, second and third colors are red, green and blue (RGB color mixing). In another embodiment, said first, second and third colors are cyan, magenta and yellow (CMY color mixing). The invention also encompasses CMYK (or CMYB) color mixing, for example by way of a forth chromic material being selected from black, dark blue or dark brown, for example.

The illumination of the chromic materials, photosensitizer, semiconducting materials and/or metal oxide materials, achieving the color change in the chromic material in accordance with the various embodiments of the present invention, is preferably indicated as "activation". Accordingly, the chromic material undergoes a color change when "activated".

The activation of the chromic materials may occur in different manners. In a preferred embodiment, the activation occurs by photoelectron that is generated when light impinges on said chromic material or on the support material, said support material comprising preferably a photo-sensitizer. In another embodiment, the activation occurs by light impinging directly on the photochromic material, for example without the generation of a photoelectron.

In a single screen comprising different chromic materials, said different chromic materials may be, independently, photochromic and/or photoelectrochromic materials and may independently be activated by a photoelectron or directly by the light.

In a preferred embodiment, the chromic material is activated in all different chromic materials of the screen by a photoelectron that is generated when light impinges on said chromic material or on the support material.

It is also noted that the color change of the chromic material is preferably reversible. The reversion of the color change, also known as "bleaching", by which the chromic material turns back to the original, basic and preferably non-coloured state, may be induced independently by one or several by various processes. Such processes are described further below, for example.

In a preferred embodiment, the support material, in particular the nanoparticles, comprise or consist essentially of a semiconducting material, preferably a photosensitizer material.

Preferably, said photosensitizer material is a material that adsorbs light of a particular wavelength and generates a photoelectron upon excitation by that light. The support material and the chromic material are provided such that the photoelectron then passes to the chromic material, preferably the photoelectrochromic material, to induce a color change.

For the purpose of the present specification, the "photosensitizing" material encompasses photoelectric and/or photovoltaic materials.

In an embodiment, the photosensitizing material absorbs UV light. An example of such a photosensitizing material is TiO₂. When activated and/or irradiated with the UV light, photoelectrons are generated and induce the desired chromic behaviour in the chromic material, in particular the color change.

According to an embodiment, the support material is selected from materials comprising, consisting essentially of or consisting of one or more selected from the group consisting of Si, SiO₂, TiO₂, Al₂O₃, ZrO₂, HfO₂, SnO₂, Fe₂O₃, ZnO, WO₃, Nb₂O₅, In₂O₃, Bi₂O3, Y₂O₃, Pr₂O₃, CeO₂ and other rare earth metal oxides, CdS, ZnS, PbS, Bi₂S₃, CdSe, CdTe, MgTiO₃, SrTiO₃, BaTiO₃, AbTiO₃, Bi₄Ti₃O₁₂ and other titanates, CaSnO₃, SrSnO₃, BaSnO₃, Bi₂Sn₃O₉, Zn₂SnO₄, ZnSnO₃ and other stannates, CaZrO₃, SrZrO₃, BaZrO₃, Bi₄Zr₃O₁₂ and other zirconates, combinations of two or more of the aforementioned and other multi-element oxides containing at least two of alkaline metal, alkaline earth metal elements, Al, Ga, In, Si, Ge, Sn, Pb, Sb, Bi, Sc, Y, La or any other lanthanide, Ti, Zr, Hf, Nb, Ta, Mo, W, Ni or Cu.

In an embodiment, one or several photosensitizers is/are colored, which means such photosensitizer reflects light in the visible spectrum of light.

In a preferred embodiment, the photosensitizer material is selected from TiO₂, SnO₂, CdS, CdSe, CdTe, ZnS, Si, Fe₂O₃, PbS, Bi₂S₃, and organic inorganic, and pure inorganic perovskites, such as Pb or Sn halide perovskite, for example.

In a preferred embodiment, the support material is selected from organic photovoltaic materials, quantum dot photovoltaic materials (CdS, CdTe, CdSe, etc), perovskite photovoltaic materials, TiO₂, SnO₂, and combinations of the aforementioned.

The aforementioned exemplary and preferred support materials may be doped or undoped.

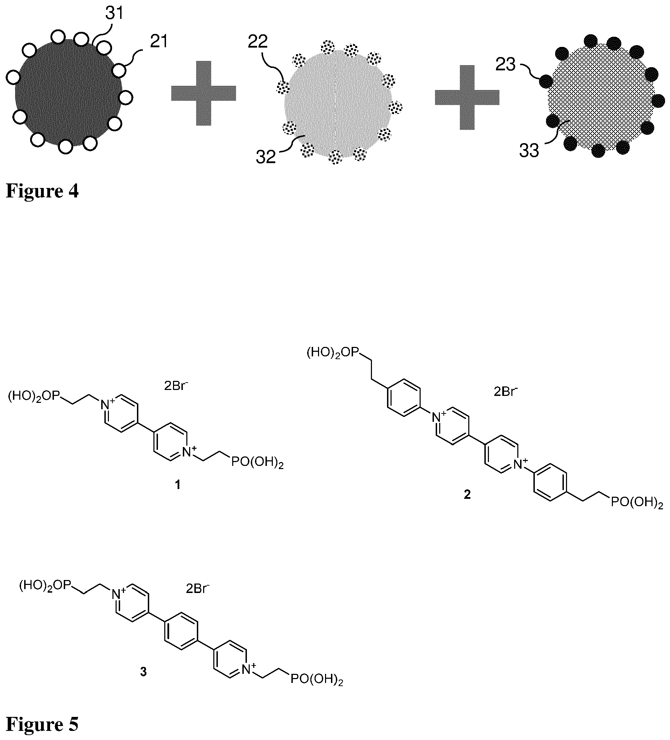

**Figure 4** illustrates an embodiment of the invention, in which different chromic materials 21, 22, 23 are provided on different support materials 31, 32, 33, which preferably include different photosensitizing (or photosensitizer) and/or semiconducting support materials. Accordingly, a first chromic material 21 is provided in contact with (preferably adsorbed on) a first photosensitizer material 31, a second chromic material 22 is provided in contact with a second photosensitizer material 32, and, optionally, a third chromic material 23 is provided in contact with a third photosensitizer material 33. According yet a more preferred embodiment, a fourth chromic material is provided in contact with a fourth photosensitizer material (not shown in Fig. 4).

According to an embodiment, said first, second and third chromic materials are suitable to have red, green and blue colors when activated, allowing a full color display on the screen based on RGB additive color mixing. In this case, a forth chromic material that is black when activated is absent.

According to another embodiment, said first, second and third chromic materials are suitable to have blue, red and yellow colors when activated, allowing thus cyan, magenta and yellow (CMY) color mixing. Preferably, a fourth chromic material is black when activated, allowing thus for CMYB color mixing.

In the embodiment as illustrated in Fig. 4, when applied to any one of the architectures shown in Figs 2A-2E, these devices comprise two or more, preferably three or more, for example four or more different chromic materials, preferably chromic materials on different, appropriate photosensitizer materials.

**Figure 5** shows exemplary photoelectrochromic materials 1-3. Compound 1 is 1-ethyl-1'-(2-phosphonoethyl)-[4,4'-bipyridine]-1,1'-diium cation. The chromic portion of compound 1 comprises 1,1'-diethyl-[4,4'-bipyridine]-1,1'-diium. Compound 1 turns blue upon excitation by blue light, in particular at light having from about 350 to about 450 nm wavelength.

Compound 2 is 1-phenyl-1'-(4-(2-phosphonoethyl)phenyl)-[4,4'-bipyridine]-1,1'-diium cation. The chromic portion of compound 2 comprises 1,1'-diphenyl-[4,4'-bipyridine]-1,1'-diium as a chromic core. Compound 2 turns green upon excitation by green light, in particular light having from about 500 nm to about 550 nm wavelength.

Compound 3 is 1-ethyl-4-(4-(1-(2-phosphonoethyl)pyridin-1-ium-4-yl)phenyl)pyridin-1-ium cation and comprises 4,4'-(1,4-phenylene)bis(1-ethylpyridin-1-ium) as a chromic core.

The compounds 1-3 are shown with bromide anions which are not mandatory but are present due to the synthetic route for producing the compounds. Compounds 1-3 may be used for coating on nanoparticles in accordance with the embodiments shown in Fig. 3 or 4, for example.

Some embodiments are herewith disclosed, which are based on the compounds shown in Fig. 5 when used with different, nanoparticle sensitizing support materials as illustrated in Fig. 4.

In a particular embodiment, a first chromic material comprises 1,1'-diethyl-[4,4'-bipyridine]-1,1'-diium as a chromic portion. For example, compound 1 in Fig. 5 is the first chromic material. The chromic material may be provided on or in electric contact with a CdS (cadmium sulfide) support, preferably CdS nanoparticles, which provide a first support material. The assembly can be excited by blue light having from about 350 to about 450 nm wavelength, and the chromic material turns blue upon excitation.

In an embodiment, a second chromic material comprises 1,1'-diphenyl-[4,4'-bipyridine]-1,1'-diium as a chromic portion. For example, compound 2 in Fig. 5 is the second chromic material. The chromic material may be provided on or in electric contact with a CsPbBr3 perovskite support, preferably CsPbBr3 perovskite quantum dots or nanoparticles, which provide a second support material. The assembly can be excited by green light at about 550 nm wavelength, for example, and the chromic material turns green upon excitation.

In an embodiment, a third chromic material comprises 4,4'-(1,4-phenylene)bis(1-ethylpyridin-1-ium) as a chromic portion. For example, compound 3 in Fig. 5 is the third chromic material. The chromic material may be provided on or in electric contact with a TiO₂ support, preferably TiO₂ nanoparticles, which provide a third support material. The assembly can be excited by UV light at from about 350 nm to about 400 nm wavelength, for example, and the chromic material turns red upon excitation.

Of course, different combinations of chromic materials and photosensitizing materials may be provided and the invention is in no way limited to the exemplary embodiments disclosed above. For example, compound 1 may be provided on TiO₂ photosensitizer, and may be activated with UV at around 350-450 nm wavelength, just to mention an example.

As illustrated with reference to Fig. 3, the invention also encompasses that different chromic materials (such as those listed above) are provided in contact with, for example anchored or adsorbed on, a single photosensitizer material.

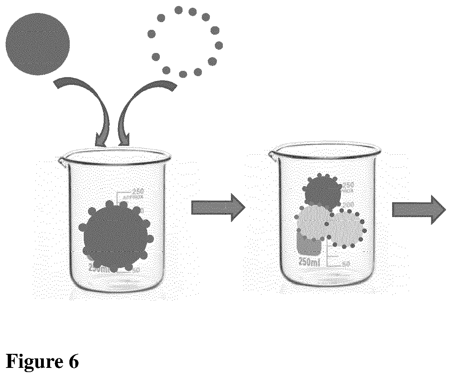

**Figure 6** illustrates an embodiment of the preparation of the photosensitizer support material in combination with the chromic materials. The sensitizer support, here shown in the form of nanoparticles, and the chromic materials are mixed in a recipient, generally in presence of a solvent and possibly additives, and allowed to get in contact with each other. Conditions in the recipient are selected so as to allow the chromic material to coat, be adsorbed and/or anchor on the surface of the sensitizer support. This step of contacting may be conducted separately for all combinations of photosensitizer and chromic materials. For example, in a first recipient, a first sensitizer material is combined with a first chromic material, and in a second recipient, a second sensitizer is combined with a second chromic material, and so forth, up to four or more combinations of sensitizer materials and chromic materials may be prepared. At the end, the combinations of the various recipients may be mixed, before being coated on a substrate 1 or on the conductive layer 11 of the substrate, for example (Figs 2A-2E). The assembly of the device can then be completed so as to obtain the screen of the invention, for example in accordance with the architectures shown in Figs 2A-2E.

It has been mentioned above how the chromic materials can be activated, directly or via a photoelectron, through illumination by the light emitting device. As mentioned, the color change of the chromic material is preferably reversible. The reversion of the color change, also known as "bleaching", is the process by which the chromic material turns back to the original, basic and preferably non-coloured state. Bleaching may be induced independently by one or several various processes. For example, the reversion of the color state may be achieved by applying a voltage at any one or both electrodes (see electrodes 11, 12 in Figs 2B-2E), by illumination, or via the electrolyte (electrolyte 13 in Figs 2C-2E).

In an embodiment, the bleaching occurs passively (automatically) with time. For example, once illumination stops, the photo-electron spontaneously recombines with the support material, in particular with the positive charge or hole generated in the support material with the generation of the photoelectron. The recombination is generally driven by Coulomb forces.

In an embodiment, the device comprises a built-in potential barrier that slows down or prevents the reversion to the bleached, non-activated state of the chromic material. In an embodiment, the support material comprises an additional layer for preventing charge recombination. Such a layer may be referred to as a blocking layer, insulating layer and/or passivation layer.

In a preferred embodiment, the blocking layer is provided on the support material and is preferably provided between the support material and the chromic material.

The blocking layer, if present, preferably has a thickness of ≥0 and up to 0.5 nm, preferably 0.1 nm and up to 0.2 nm. In an embodiment, the thickness of the blocking layer is such that transfer, for example by tunnelling, of the electrons from the photo-excited photosensitizing support material to the chromic material is still possible, but the transfer of the electrons from the chromic material to the sensitizing support material is rendered difficult or impossible.

In an embodiment, the blocking layer comprises and/or consists of a suitable metal or Si oxide material having a suitable conduction band position (Ec). Further information about suitable blocking layer materials, the determination of Ec values and LUMO values is found in WO2013084029A1.

While certain of the preferred embodiments of the present invention have been described and specifically exemplified above, it is not intended that the invention be limited to such embodiments. Various modifications may be made thereto without departing from the scope and spirit of the present invention, as set forth in the following claims. Herein below, examples of the invention are disclosed. These examples are for illustration only and are not intended to limit the scope of the present invention.

### Example

A full-color passive screen in accordance with the device architecture shown in Fig. 2C and photoelectrochromic materials shown in Fig. 4 is prepared as follows.

### Materials

Photoelectrochromic dyes (compounds 1-3 in Fig. 5) are designed and fabricated in-house. Photovoltaic quantum dots, TiO₂ nanoparticles and perovskite quantum dots are synthesized by literature reported procedures. FTO and other chemicals are purchased from commercial sources. The electrolyte is prepared with dissolving 1 M t-BuPF6 into propylene carbonate.

### Working electrode preparation:

A TiO₂-dye mix is prepared by mixing the TiO₂ paste (containing solvent and binder) with compound 3 (Fig. 3). The paste and the dye are mixed until the dye mix is homogeneous. Then the mixture is screen printed on FTO glass, mildly heated to remove the solvent, then the dye 1 coated TiO₂ will be transferred onto the transparent electrode by screen printing.

Then, the other two kinds of dye-coated nanoparticles are screen printed onto the electrode layer-by-layer, including compound 1 (Fig. 3) coated CdS nanoparticles and compound 2 (Fig. 3) coated CsPbBr₃ nanoparticles.

### Counter electrode preparation:

Counter electrode is prepared by electrodeposition of a thin layer of PEDOT on the surface of a commercially obtained FTO transparent electrode.

### PECD device fabrication:

PECD device is here fabricated by the laboratory hole-filling method, but could likewise be prepared by a widely used industrial process (e.g. the one-drop-filling (ODF) method).

The working and counter electrode are laminated with a spacer ~ 10-100 µm and glued around the active area, reserving two holes either on the glass or on part of the sealing glue. The electrolyte (see Materials) is filled into the cavity that is created by the spacer and the glue. After filling, the two holes are sealed by glue, to get the PECD (photoelectrochromic display) device.

### Operation:

The obtained device functions as a screen and can be used to show a picture when illuminated by a modified laser projector, which comprises three lasers emitting blue light at 450~500 nm, UV light at 350~400 nm, and green light at 500~550 nm wavelength, so as to activate the chromic materials on the screen and produce the projected image.

### Bleaching:

The image shown on the screen can be bleached within 10 second by reverse biasing the PECD potential. The image also bleaches passively after 30 min.

## Claims

1. A screen system (60, 65) comprising a screen (10), a light emitting device (6, 7), and a driver unit (3) wherein:
- said screen comprises first and second substrates (1, 2), a space (5) between by said substrates, a support material (24) and chromic materials (21, 22,), wherein:
said support material is provided in said space (5);
said chromic materials are selected from photoelectrochromic materials, photochromic materials, and combinations thereof, said chromic materials preferably having the property of changing color when activated by way of electromagnetic radiation or by way of a photoelectron that is generated by way of electromagnetic radiation, wherein said chromic materials comprise at least first and second chromic materials (21, 22) that have first and second colors when activated, wherein said first and second colors are different; and,
said at least first and second chromic materials are provided on said support material;
- said light emitting device is configured to emit light (15, 16, 17) in the direction of said screen so as to activate said chromic materials, wherein said light emitting device is further configured to emit light having at least first and second different, predetermined wavelengths or wavelength ranges, wherein:
light having said first wavelength or wavelength range is suitable to activate said first chromic material or to generate a photoelectron capable of activating said first chromic material, and,
light having said second wavelength or wavelength range is suitable to activate said second chromic material or to generate a photoelectron capable of activating said second chromic material.

2. The screen system of claim 1, wherein said chromic materials comprise at least a third chromic material (23), wherein said third chromic material has a third color when activated, wherein said third color is different from said first and second colors.

3. The screen system of claim 2, wherein said light emitting device is further configured to emit light having a third wavelength or wavelength range, wherein said third wavelength is different from said first and second wavelength or wavelength ranges, and wherein light having said third wavelength or wavelength range is suitable to activate said third chromic material.

4. The screen system of any one of the preceding claims, wherein said driver unit is suitable to adjust the intensity and/or duration of light emission of said light emitting device.

5. The screen system of any one of the preceding claims, wherein said light emitting device comprises a projector (6), preferably a laser projector.

6. The screen system of any one of claims 1-4, wherein said light emitting device comprises a light emitting panel (7), said light emitting panel being preferably selected from an LED display, a liquid crystal display, and from a plasma display.

7. The screen system of any one of the preceding claims, wherein said support material comprises nanoparticles, wherein said chromic materials are adsorbed on said nanoparticles.

8. The screen system of any one of the preceding claims, wherein said support material comprises and/or consist essentially of a photo-sensitizer material, preferably a semi-conducting photo-sensitizer material.

9. The screen system of any one of the preceding claims, wherein said support material comprises a first support material and a second support material, wherein said first and second support materials are different.

10. The screen system of any one of the preceding claims, wherein said support material comprises a first support material, preferably provided in the form of first nanoparticles (31), and a second support material, preferably provided in the form of second nanoparticles (32), wherein said first chromic material is provided on said first support material and said second chromic material is provided on said second support material.

11. The screen system of any one of the preceding claims, wherein said support material comprises a third support material, which is different from said first and second materials, wherein said third support material is preferably provided in the form of third nanoparticles (33), and wherein said third chromic material is provided on said third support material.

12. The screen system of any one claims 9-11, wherein said first support material generates a photoelectron upon absorption of light having said first wavelength and/or wavelength range, said second support material generates a photoelectron upon absorption of light having said second wavelength and/or wavelength range, and, if applicable, said third support material generates a photoelectron upon absorption of light having said third wavelength and/or wavelength range.

13. The screen system of any one of the preceding claims, wherein said screen further comprises an electrode (11) provided on said first substrate (1), said electrode being in electric contact with said support material.

14. The screen system of any one of the preceding claims, wherein said screen further comprises an electrolyte (13) provided between said substrates.

15. A screen (10) comprising first and second substrates (1, 2), a space (5) between said substrates, a support material (24) and chromic materials (21, 22,), wherein:
said support material is provided in said space (5);
said chromic materials are selected from photoelectrochromic materials, photochromic materials, and combinations thereof, said chromic material preferably having the property of changing color when activated by way of electromagnetic radiation or by way a photoelectron that is generated by way of electromagnetic radiation, wherein said chromic materials comprise at least first and second chromic materials (21, 22) that have first and second colors when activated, wherein said first and second colors are different; and,
said at least first and second chromic materials are provided on said support material.

16. The screen of claim 15, wherein said chromic materials comprise at least a third chromic material (23), wherein said third chromic material has a third color when activated, wherein said third color is different from said first and second colors.

17. The screen of any one of claims 15-16, wherein said support material comprises nanoparticles, wherein said chromic materials are adsorbed on said nanoparticles.

18. The screen of any one of claims 15-17, wherein said support material comprises and/or consist essentially of a photo-sensitizer material, preferably semi-conducting photo-sensitizer material.

19. The screen of any one of claims 15-18, wherein said support material comprises a first support material and a second support material, wherein said first and second support material are different.

20. The screen of any one of claims 15-19, wherein said support material comprises a first support material, preferably provided in the form of first nanoparticles (31), and a second support material, preferably provided in the form of second nanoparticles (32), wherein said first chromic material is provided on said first support material and said second chromic material is provided on said second support material.

21. The screen of any one of claims 15-20, wherein said support material comprises a third support material, which is different from said first and second materials, wherein said third support material is preferably provided in the form of third nanoparticles (33), and wherein said third chromic material is provided on said third support material.

22. The screen of any one claims 15-21, wherein said first support material generates a photoelectron upon absorption of light having said first wavelength and/or wavelength range, said second support material generates a photoelectron upon absorption of light having said second wavelength and/or wavelength range, and, if applicable, said third support material generates a photoelectron upon absorption of light having said third wavelength and/or wavelength range.

23. The screen of any one of claims 15-22, wherein said screen further comprises an electrode (11) provided on said first substrate (1), said electrode (11) being in electric contact with said support material.

24. The screen of any one of claims 15-23, wherein said screen further comprises an electrolyte (13) provided between said substrates.

25. A method for operating the screen system of any one of claims 1-14, the method comprising inducing said light emitting device so as to emit light of said first and second wavelengths and/or wavelengths ranges (15, 16), and, if applicable, said second wavelength and/or wavelength range on one or more spots (19) of said screen, thereby activating first and second chromic materials, and, if applicable, third chromic materials at said spot.

26. The method of claim 25, comprising inducing said light emitting device so as to project on the surface of said screen light having said first, second, and, if applicable, third wavelength range, thereby activating said first, second and, if applicable third chromic materials, and generating an image on said screen.
